# EUROPEAN PATENT APPLICATION

(11) **EP 4 763 608 A1**
(43) Date of publication of application: **24.06.2026**
(21) Application number: 25226375.1
(22) Date of filing: 22.12.2025
(51) Int. Cl.: B60N 2/80

(54) **HEADREST FOLDING MECHANISM**

(30) Priority: 23.12.2024 CN 202411899695; 23.12.2024 CN 202423173604 U
(71) Applicant: Adient (Chongqing) Automotive Components Co., Ltd., Liangjiang New Area, Chongqing 401122 (CN)
(72) Inventor: XIN, Yi, Chongqing, Liangjiang New Area, 401122 (CN); LI, Qingmao, Chongqing, Liangjiang New Area, 401122 (CN); DENG, Xinyuan, Chongqing, Liangjiang New Area, 401122 (CN); LI, Bin, Chongqing, Liangjiang New Area, 401122 (CN)
(74) Representative: Liedtke & Partner Patentanwälte

(57) **Abstract**

The present invention discloses a headrest folding mechanism, comprising a support (1) and a rotation shaft crossbar (3), a lower part of the support (1) being fitted round the rotation shaft crossbar (3) and rotatable about the rotation shaft crossbar (3); a locking member (6) is fitted round the rotation shaft crossbar (3) in a fixed manner, and a return torsion spring (8) is fitted round the rotation shaft crossbar (3); a middle crossbar parallel to the rotation shaft crossbar (3) is fixed to a middle part of the support (1); a locking torsion spring (7), a locking ratchet (4), an unlocking ratchet (5) and an unlocking torsion spring (14) are fitted round the middle crossbar (2) in sequence; the locking ratchet (4) and the unlocking ratchet (5) are arranged side by side in such a way as to move in linkage, and an unlocking pull member is provided on the locking ratchet (4) or the unlocking ratchet (5); in a locked state, side walls of the locking ratchet (4) and the unlocking ratchet (5) both abut a side wall of the locking member (6); to unlock, the unlocking pull member is pulled, and the side walls of the locking ratchet (4) and the unlocking ratchet (5) disengage from the side wall of the locking member (6). The locking ratchet (4) and the locking member (6) are used to realize locking of the headrest mechanism with two locking pieces, so the headrest folding mechanism has superior dynamic collision safety performance, while also being adaptable to different forms of unlocking.

## Description

### Technical Field

The present invention relates to the technical field of automotive seats, in particular to a headrest folding mechanism.

### Background Art

Headrests are an important automotive seat product, playing an important role in providing support for the head, reducing the risk of neck injury, and improving passenger comfort.

In existing automotive seat products, the mechanism for folding the headrest forward is in almost all cases a single ratchet locking mechanism, which fails to achieve complete locking. When a vehicle is involved in a collision, the force of the collision acts on the headrest; this can cause the single ratchet mechanism to unlock, so that the headrest moves, and is unable to effectively support the head and neck. The risk of passenger injury is increased, and passenger safety cannot be guaranteed.

### Summary of the Invention

To solve the above technical problem, the present invention provides a headrest folding mechanism with high safety performance that is capable of locking with two locking pieces.

The technical solution thereof is as follows: a headrest folding mechanism, the key features thereof being that it comprises a support and a rotation shaft crossbar, a lower part of the support being fitted round the rotation shaft crossbar and rotatable about the rotation shaft crossbar;
a locking member is fitted round the rotation shaft crossbar in a fixed manner, and a return torsion spring is fitted round the rotation shaft crossbar, two ends of the return torsion spring being respectively located at two sides in an axial direction of the rotation shaft crossbar, the return torsion spring having one end connected to a side wall of the locking member, and another end in abutment with the support;
a middle crossbar parallel to the rotation shaft crossbar is fixed to a middle part of the support; a locking torsion spring, a locking ratchet, an unlocking ratchet and an unlocking torsion spring are fitted round the middle crossbar in sequence, wherein the locking torsion spring has one end connected to the support, and another end connected to the locking ratchet, and the unlocking torsion spring has one end connected to the support, and another end connected to the unlocking ratchet;
the locking ratchet and the unlocking ratchet are arranged side by side in such a way as to move in linkage, and an unlocking pull member is provided on the locking ratchet or the unlocking ratchet; in a locked state, side walls of the locking ratchet and the unlocking ratchet both abut a side wall of the locking member; to unlock, the unlocking pull member is pulled, and the side walls of the locking ratchet and the unlocking ratchet disengage from the side wall of the locking member. When the structure described above is employed, it is possible to realize locking of the headrest folding mechanism with two locking pieces by controlling the locking ratchet and the locking member. To unlock, it is necessary to unlock both the locking ratchet and the locking member in order to perform folding. Thus, the safety of the headrest in use is improved, and unlocking of the headrest during a collision, which would result in injury to the user, is prevented. Moreover, the headrest has superior dynamic collision safety performance, being able to support the head and neck more effectively. At the same time, an unlocking device is provided on the unlocking ratchet, and the two locking pieces can be unlocked by means of the unlocking device. After unlocking, under the action of the return torsion spring, the support can rotate about the rotation shaft crossbar, thus realizing a folding function.

Preferably, the support comprises a left sheet metal support and a right sheet metal support connected together, lower parts of the left sheet metal support and the right sheet metal support being fitted round the rotation shaft crossbar, and two ends of the middle crossbar being fixed to the left sheet metal support and the right sheet metal support, respectively; the locking torsion spring, the locking ratchet, the unlocking ratchet, the unlocking torsion spring, the locking member and the return torsion spring are all arranged between the left sheet metal support and the right sheet metal support. When the structure described above is employed, the support is fitted round the rotation shaft crossbar, and an external support can be controlled by means of the internal locking torsion spring, locking ratchet, unlocking ratchet and other components, thus enabling rotation of the support about the rotation shaft crossbar, and further achieving the objective of overall folding.

Preferably, the locking member is a cam structure; a limiting recess is provided on a side wall of the locking member remote from a side where the return torsion spring is connected, two recess walls of the limiting recess being respectively a first limiting end and a second limiting end; a limiting crossbar parallel to the rotation shaft crossbar is fixed to the support, the limiting crossbar being located at one side of the rotation shaft crossbar, and the limiting crossbar being located in the limiting recess. When the structure described above is employed, the support can be limited, cooperating with the locking ratchet above to achieve locking with two locking pieces. At the same time, it can be ensured that the support can only rotate within the limits of the limiting recess, preventing excessive rotation that would cause damage.

Preferably, a limiting protrusion is provided at an upper end of an outer side wall of the locking member, and a limiting notch is provided on an outer side wall of the locking ratchet and the unlocking ratchet at a position corresponding to the limiting protrusion; in a locked state, the limiting notch is engaged with the limiting protrusion. When the structure described above is employed, locking control of the locking ratchet and the locking member can be achieved with two locking pieces; to unlock, the unlocking ratchet drives the locking ratchet to disengage from the limiting protrusion of the locking member.

Preferably, a linked-movement notch is provided on an outer side wall of the locking ratchet, the linked-movement notch being located at the same side as the limiting recess, and a locking pin is provided on a side of the unlocking ratchet that is close to the locking ratchet, the locking pin extending into the linked-movement notch; the unlocking pull member is connected to the unlocking ratchet, and when the unlocking pull member is pulled, the unlocking ratchet rotates and disengages from the locking member to achieve unlocking, and at the same time, the unlocking ratchet drives the locking ratchet to rotate and disengage from the locking member to achieve unlocking. When the structure described above is employed, the locking pin can lock the locking ratchet, so unlocking due to a collision during use, which would result in personal injury, can be prevented, and safety performance is high.

Preferably, the locking torsion spring has one end fixed to the left sheet metal support, and another end connected to a side of the locking ratchet that is remote from the linked-movement notch;
the unlocking torsion spring has one end connected to a side of the unlocking ratchet that is close to the locking pin, and another end fixed to the right sheet metal support; the return torsion spring has one end fixed to the left sheet metal support, and another end connected to a side of the locking member that is remote from the limiting recess. When the structure described above is employed, once the relative positional relationship of the locking ratchet and the unlocking ratchet has been changed by an external force, the torsion springs can cause them to return to their original state, and at the same time can cooperate with the locking pin to limit the locking ratchet, so that it remains in a stable locked state. When not unlocked, the return torsion spring is able, together with the limiting crossbar, to fix and lock the locking cam; after unlocking, the return torsion spring drives a support at an outer side to return.

Preferably, it further comprises two support tubes arranged side by side, crossbar supports being fixed to upper ends of both of the support tubes; two ends of the rotation shaft crossbar are able to project from the left sheet metal support and the right sheet metal support, respectively, and projecting ends of these two ends are respectively fixed to the crossbar supports at the upper ends of the two support tubes;
a casing is fitted round the junction between the support tube and the crossbar support, and through-holes in communication with a bore of the support tube are provided on both the crossbar support and the casing. When the structure described above is employed, the support tube at the lower end and the folding portion at the upper end can be connected together by means of the crossbar support, so as to install the structure on an automotive seat in its entirety.

Preferably, the unlocking pull member is a pull cable, a connecting hole is provided on the unlocking ratchet, and a connecting tube member is connected by means of the connecting hole; one end of the pull cable is connected by passing through the connecting tube member, and another end passes out through the support tube via the through-holes provided on the crossbar support and the casing. When the structure described above is employed, the locking cam and the locking ratchet can be unlocked by pulling the pull cable connected to the unlocking ratchet, to achieve the objective of folding the headrest.

Preferably, the unlocking pull member is a pull strap, the pull strap being connected to an upper end of the unlocking ratchet by a screw, and an outer end of the pull strap passing out through a rear part of the left sheet metal support and the right sheet metal support. When the structure described above is employed, the form of the unlocking pull member is changed to suit pull strap unlocking; by pulling the pull strap on the unlocking ratchet, the connected unlocking ratchet can be driven to rotate, thereby unlocking the locking ratchet and the locking cam, to achieve the objective of folding.

Compared with the prior art, the present invention has the following beneficial effects: the two locking pieces, namely the locking ratchet and the locking member, are used to realize locking of the headrest mechanism with two locking pieces; the headrest folding mechanism with two locking pieces can eliminate the semi-locking function safety risk associated with products currently on the market caused by mechanism principles, and has superior dynamic collision safety performance, while also being adaptable to different forms of unlocking.

### Brief Description of the Drawings

- Figure 1: is a schematic drawing of the structure of the present invention,
- Figure 2: is a schematic drawing of Figure 1, viewed from another angle,
- Figure 3: is a front view of Figure 1,
- Figure 4: is a structural schematic drawing of unlocking by a pull cable, and
- Figure 5: is a structural schematic drawing of unlocking by a pull strap.

Corresponding parts are marked with the same reference symbols in all figures.

### Detailed Description of Embodiments

The present invention is described further below in conjunction with embodiments and the accompanying drawings.

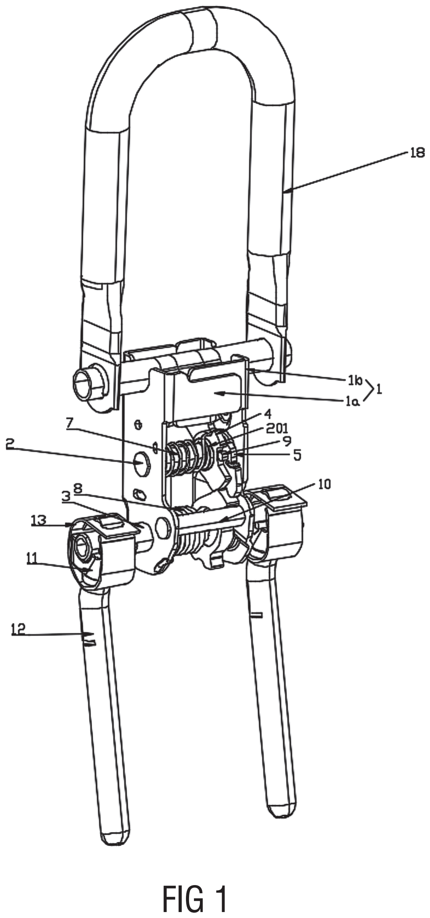

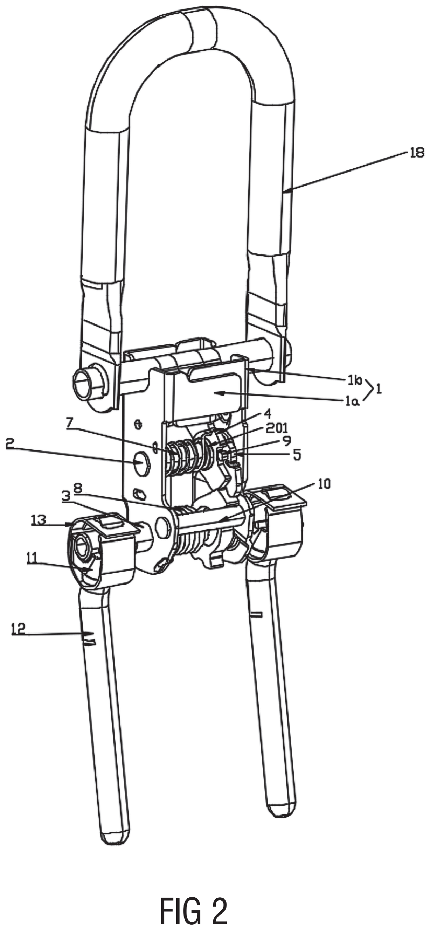

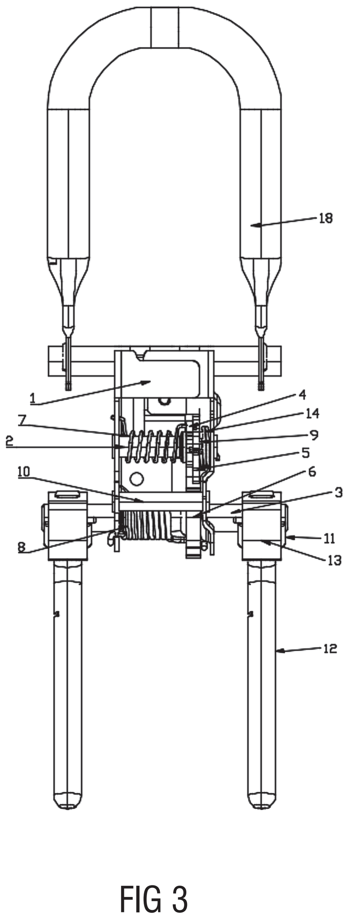

As shown in Figs. 1 - 3, a headrest folding mechanism comprises a support 1 and a rotation shaft crossbar 3. A headrest loop 18 is fixed to an upper part of the support 1. A lower part of the support 1 is fitted round the rotation shaft crossbar 3, and is rotatable about the rotation shaft crossbar 3.

A locking member 6 is fitted round the rotation shaft crossbar 3 in a fixed manner. A return torsion spring 8 is fitted round the rotation shaft crossbar 3, two ends of the return torsion spring 8 being located at two sides in the axial direction of the rotation shaft crossbar 3, respectively. One end of the return torsion spring 8 is connected to a side wall of the locking member 6, and the other end abuts the support 1.

A middle crossbar 2 parallel to the rotation shaft crossbar 3 is fixed to a middle part of the support 1. A locking torsion spring 7, a locking ratchet 4, an unlocking ratchet 5 and an unlocking torsion spring 14 are fitted round the middle crossbar 2 in sequence. The locking torsion spring 7 has one end connected to the support 1, and another end connected to the locking ratchet 4. The unlocking torsion spring 14 has one end connected to the support 1, and another end connected to the unlocking ratchet 5.

The locking ratchet 4 and the unlocking ratchet 5 are arranged side by side in such a way as to move in linkage, and an unlocking pull member is provided on the locking ratchet 4 or the unlocking ratchet 5. In a locked state, side walls of the locking ratchet 4 and the unlocking ratchet 5 both abut a side wall of the locking member 6; to unlock, the unlocking pull member is pulled, and the side walls of the locking ratchet 4 and the unlocking ratchet 5 disengage from the side wall of the locking member 6.

The support 1 comprises a left sheet metal support 1a and a right sheet metal support 1b connected together. Lower parts of the left sheet metal support 1a and the right sheet metal support 1b are fitted round the rotation shaft crossbar 3. Two ends of the middle crossbar 2 are fixed to the left sheet metal support 1a and the right sheet metal support 1b, respectively. The locking torsion spring 7, the locking ratchet 4, the unlocking ratchet 5, the unlocking torsion spring 14, the locking member 6 and the return torsion spring 8 are all arranged between the left sheet metal support 1a and the right sheet metal support 1b.

The locking member 6 is a cam structure; a limiting recess is provided on a side wall of the locking member 6 remote from the side where the return torsion spring 8 is connected. Two recess walls of the limiting recess are respectively a first limiting end and a second limiting end. A limiting crossbar 10 parallel to the rotation shaft crossbar 3 is fixed to the support 1; the limiting crossbar 10 is located at one side of the rotation shaft crossbar 3, and the limiting crossbar 10 is located in the limiting recess. When locked, the limiting crossbar 10 is located at the first limiting end; when unlocked, the limiting crossbar 10 is located at the second limiting end.

A limiting protrusion is provided at an upper end of an outer side wall of the locking member 6, and limiting notches are provided on outer side walls of the locking ratchet 4 and the unlocking ratchet 5 at positions corresponding to the limiting protrusion. In a locked state, the limiting notches are engaged with the limiting protrusion. A linked-movement notch is provided on the outer side wall of the locking ratchet 4, the linked-movement notch being located at the same side as the limiting recess. A locking pin 9 is provided on a side of the unlocking ratchet 5 that is close to the locking ratchet 4, the locking pin 9 extending into the linked-movement notch. The unlocking pull member is connected to the unlocking ratchet 5; when the unlocking pull member is pulled, the unlocking ratchet 5 rotates and disengages from the locking member 6 to achieve unlocking, and at the same time, the unlocking ratchet 5 drives the locking ratchet 4 to rotate and disengage from the locking member 6 to achieve unlocking.

An outer protruding ring 201 is integrally provided at a position 2/3 of the way along the middle crossbar 2. The locking ratchet 4 and the unlocking ratchet 5 are sequentially fitted at one side of the outer protruding ring 201, with one side of the locking ratchet 4 abutting the outer protruding ring 201.

The locking torsion spring 7 is fitted round one side of the middle crossbar 2, the locking torsion spring 7 having one end fixed to the left sheet metal support 1a, and another end connected to a side of the locking ratchet 4 that is remote from the linked-movement notch. The locking torsion spring 7 is able, together with the locking pin 9, to maintain a locked state of the locking ratchet 4.

The unlocking torsion spring 14 is provided on the other side of the middle crossbar 2, and a bushing is provided at an outer side of the unlocking ratchet 5. The bushing is fitted round the middle crossbar 2, and the unlocking torsion spring 14 is installed at an outer side of the bushing. The unlocking torsion spring 14 has one end connected to a side of the unlocking ratchet 5 that is close to the locking pin 9, and another end fixed to the right sheet metal support 1b. The unlocking torsion spring 14 can perform unlocking between the locking ratchet 4 and the unlocking ratchet 5. After unlocking, return can be performed again due to the action of the torsion spring.

The return torsion spring 8 has one end fixed to the left sheet metal support 1a, and another end connected to a side of the locking member 6 that is remote from the limiting recess. The return torsion spring 8 is able, together with the limiting crossbar 10, to maintain a locked state of the locking member 6. After unlocking, the sheet metal support 1 and the locking member 6 can be returned by means of the return torsion spring 8.

The headrest folding mechanism further comprises two support tubes 12 arranged side by side. Crossbar supports 11 are fixed to upper ends of both of the support tubes 12. Two ends of the rotation shaft crossbar 3 are able to project from the left sheet metal support 1a and the right sheet metal support 1b, respectively, and the projecting ends of these two ends are respectively fixed to the crossbar supports 11 at the upper ends of the two support tubes 12. A casing 13 is fitted round the junction between the support tube 12 and the crossbar support 11, and a through-hole in communication with a bore of the support tube 12 is provided on both the crossbar support 11 and the casing 13.

The headrest folding mechanism can be adapted to two different forms of unlocking, specifically, unlocking by a pull cable 15b, and unlocking by a pull strap 15a.

### Embodiment 1: Unlocking by the pull cable 15b

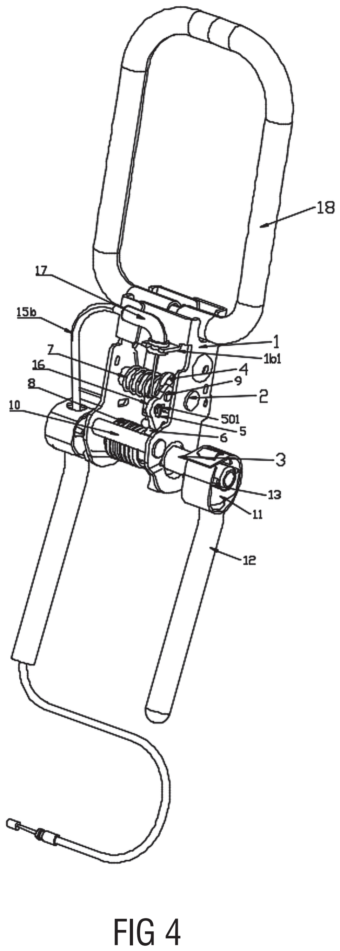

As shown in Fig. 4, when the unlocking pull member is the pull cable 15b for unlocking, a connecting hole 501 is provided on the unlocking ratchet 5, and a connecting tube member 16 is connected by means of the connecting hole 501. One end of the pull cable 15b is connected by passing through the connecting tube member 16, and another end passes out through the support tube 12 via the through-holes provided on the crossbar support 11 and the casing 13. By pulling the pull cable 15b, the headrest mechanism can be unlocked and folded.

An outwardly protruding limiting member is provided on one side of the connecting tube member 16; the limiting member is able to extend into the connecting hole 501 of the unlocking ratchet 5, and tightly abuts one end of the connecting hole 501. An outwardly protruding mounting port 1b1 is provided at an upper end of the right sheet metal support 1b. The pull cable 15b is provided with a through-tube 17 at a position close to the upper end of the right sheet metal support 1b. The pull cable 15b contains twisted steel wires, which can extend into the through-tube 17, and are connected to the connecting tube member 16 at a front side. The through-tube 17 can be engaged in the mounting port 1b1, thus being kept stationary.

A round hole is provided on the rotation shaft crossbar 3 at a side close to the return torsion spring 8; the pull cable 15b can extend into the round hole, and passes out through the support tube 12, being connected to an external mechanism and thus enabling control of the headrest.

### Embodiment 2: Unlocking by the pull strap 15a

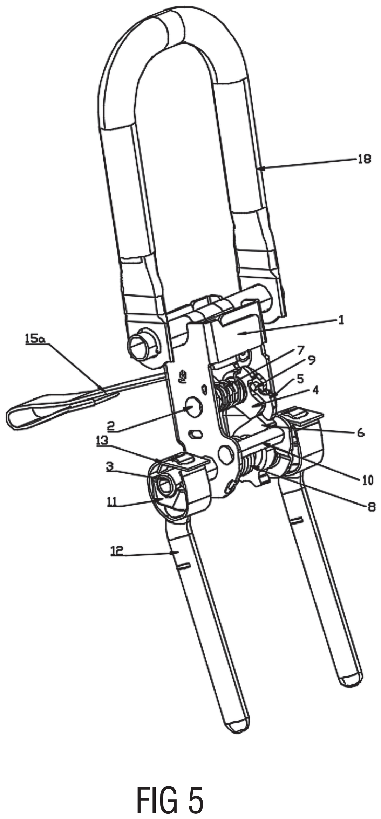

As shown in Fig. 5, when the form of unlocking is unlocking by the pull strap 15a, the pull strap 15a is connected to an upper end of the unlocking ratchet 5 by a screw. An outer end of the pull strap 15a passes out through a rear part of the left sheet metal support 1a and the right sheet metal support 1b, enabling the pull strap 15a to be pulled. Under the driving action of the pull strap 15a, the locking pin 9 provided on the unlocking ratchet 5 can push the locking ratchet 4 to jointly rotate about the middle crossbar 2, so that it releases the locking of the locking member 6, thereby realizing unlocking. After unlocking, under the action of the return torsion spring 8, the support 1 can rotate about the rotation shaft crossbar 3, to realize a folding function.

Finally, it should be explained that the description above is merely of preferred embodiments of the present invention. Enlightened by the present invention, those skilled in the art could make various similar representations without violating the purpose and claims of the present invention, and all such changes fall within the scope of protection thereof.

### List of References

- 1: support
- 1a: left sheet metal support
- 1b: right sheet metal support
- 1b1: mounting port
- 2: middle crossbar
- 3: rotation shaft crossbar
- 4: locking ratchet
- 5: unlocking ratchet
- 6: locking member
- 7: locking torsion spring
- 8: return torsion spring
- 9: locking pin
- 10: limiting crossbar
- 11: crossbar support
- 12: support tubes
- 13: casing
- 14: unlocking torsion spring
- 15a: pull strap
- 15b: pull cable
- 16: connecting tube member
- 17: through-tube
- 18: headrest loop
- 201: outer protruding ring
- 501: connecting hole

## Claims

1. A headrest folding mechanism, comprising:
- a support (1) and a rotation shaft crossbar (3), a lower part of the support (1) being fitted round the rotation shaft crossbar (3) and rotatable about the rotation shaft crossbar (3);
- a locking member (6) is fitted round the rotation shaft crossbar (3) in a fixed manner, and a return torsion spring (8) is fitted round the rotation shaft crossbar (3), two ends of the return torsion spring (8) being respectively located at two sides in an axial direction of the rotation shaft crossbar (3), the return torsion spring (8) having one end connected to a side wall of the locking member (6), and another end in abutment with the support (1);
- a middle crossbar (2) parallel to the rotation shaft crossbar (3) is fixed to a middle part of the support (1);
- a locking torsion spring (7), a locking ratchet (4), an unlocking ratchet (5) and an unlocking torsion spring (14) are fitted round the middle crossbar (2) in sequence,
wherein the locking torsion spring (7) has one end connected to the support (1), and another end connected to the locking ratchet (4), and the unlocking torsion spring (14) has one end connected to the support (1), and another end connected to the unlocking ratchet (5);
wherein the locking ratchet (4) and the unlocking ratchet (5) are arranged side by side in such a way as to move in linkage, and
wherein an unlocking pull member is provided on the locking ratchet (4) or the unlocking ratchet (5);
wherein, in a locked state, side walls of the locking ratchet (4) and the unlocking ratchet (5) both abut a side wall of the locking member (6); and
wherein to unlock, the unlocking pull member is pulled, and the side walls of the locking ratchet (4) and the unlocking ratchet (5) disengage from the side wall of the locking member (6).

2. The headrest folding mechanism as claimed in claim 1, wherein the support (1) comprises a left sheet metal support (1a) and a right sheet metal support (1b) connected together, lower parts of the left sheet metal support (1a) and the right sheet metal support (1b) being fitted round the rotation shaft crossbar (3), and two ends of the middle crossbar (2) being fixed to the left sheet metal support (1a) and the right sheet metal support (1b), respectively; the locking torsion spring (7), the locking ratchet (4), the unlocking ratchet (5), the unlocking torsion spring (14), the locking member (6) and the return torsion spring (8) are all arranged between the left sheet metal support (1a) and the right sheet metal support (1b).

3. The headrest folding mechanism as claimed in claim 1 or 2, wherein the locking member (6) is a cam structure; a limiting recess is provided on a side wall of the locking member (6) remote from a side where the return torsion spring (8) is connected, two recess walls of the limiting recess being respectively a first limiting end and a second limiting end; a limiting crossbar (10) parallel to the rotation shaft crossbar (3) is fixed to the support (1), the limiting crossbar (10) being located at one side of the rotation shaft crossbar (3), and the limiting crossbar (10) being located in the limiting recess.

4. The headrest folding mechanism as claimed in claim 3, wherein a limiting protrusion is provided at an upper end of an outer side wall of the locking member (6), and a limiting notch is provided on an outer side wall of the locking ratchet (4) and the unlocking ratchet (5) at a position corresponding to the limiting protrusion; in a locked state, the limiting notch is engaged with the limiting protrusion.

5. The headrest folding mechanism as claimed in claim 3 or 4, wherein a linked-movement notch is provided on an outer side wall of the locking ratchet (4), the linked-movement notch being located at the same side as the limiting recess, and a locking pin (9) is provided on a side of the unlocking ratchet (5) that is close to the locking ratchet (4), the locking pin (9) extending into the linked-movement notch; the unlocking pull member is connected to the unlocking ratchet (5), and when the unlocking pull member is pulled, the unlocking ratchet (5) rotates and disengages from the locking member (6) to achieve unlocking, and at the same time, the unlocking ratchet (5) drives the locking ratchet (4) to rotate and disengage from the locking member (6) to achieve unlocking.

6. The headrest folding mechanism as claimed in claim 5, wherein the locking torsion spring (7) has one end fixed to the left sheet metal support (1a), and another end connected to a side of the locking ratchet (4) that is remote from the linked-movement notch;
the unlocking torsion spring (14) has one end connected to a side of the unlocking ratchet (5) that is close to the locking pin (9), and another end fixed to the right sheet metal support (1b);
the return torsion spring (8) has one end fixed to the left sheet metal support (1a), and another end connected to a side of the locking member (6) that is remote from the limiting recess.

7. The headrest folding mechanism as claimed in claim 6, wherein it further comprises two support tubes (12) arranged side by side, crossbar supports (11) being fixed to upper ends of both of the support tubes (12); two ends of the rotation shaft crossbar (3) are able to project from the left sheet metal support (1a) and the right sheet metal support (1b), respectively, and projecting ends of these two ends are respectively fixed to the crossbar supports (11) at the upper ends of the two support tubes (12);
a casing (13) is fitted round the junction between the support tube (12) and the crossbar support (11), and through-holes in communication with a bore of the support tube (12) are provided on both the crossbar support (11) and the casing (13).

8. The headrest folding mechanism as claimed in claim 7, wherein the unlocking pull member is a pull cable (15b), a connecting hole (501) is provided on the unlocking ratchet (5), and a connecting tube member (16) is connected by means of the connecting hole (501); one end of the pull cable (15b) is connected by passing through the connecting tube member (16), and another end passes out through the support tube (12) via the through-holes provided on the crossbar support (11) and the casing (13).

9. The headrest folding mechanism as claimed in claim 7, wherein the unlocking pull member is a pull strap (15a), the pull strap (15a) being connected to an upper end of the unlocking ratchet (5) by a screw, and an outer end of the pull strap (15a) passing out through a rear part of the left sheet metal support (1a) and the right sheet metal support (1b).
